(19) Europäisches Patentamt
European Patent Office
Office européen des brevets

(11) Veröffentlichungsnummer: 0 341 201
A2

# (12) EUROPÄISCHE PATENTANMELDUNG

(21) Anmeldenummer: 89810284.3

(22) Anmeldetag: 12.04.89

(51) Int. Cl.4: B 05 D 1/20
H 01 B 1/12

(30) Priorität: 21.04.88 CH 1471/88 10.01.89 CH 64/89

(43) Veröffentlichungstag der Anmeldung: 08.11.89 Patentblatt 89/45

(84) Benannte Vertragsstaaten: CH DE FR GB IT LI NL

(71) Anmelder: CIBA-GEIGY AG
Klybeckstrasse 141
CH-4002 Basel (CH)

(72) Erfinder: Wegmann, Alex, Dr.
Binningerstrasse 38
CH-4123 Allschwil (CH)

Hunziker, Max, Dr.
Chasseralstrasse 8
CH-3186 Düdingen (CH)

Tieke, Bernd, Dr.
Route Bel-Air 22
CH-1723 Marly (CH)

## (54) Ultradünne Schichten von Dibenzotetraaza-[14]-annulen-Derivaten.

(57) Beschrieben werden Mono- oder Multischichtsysteme enthaltend ein Dibenzotetraaza-[14]-annulen-Derivat der Formel I

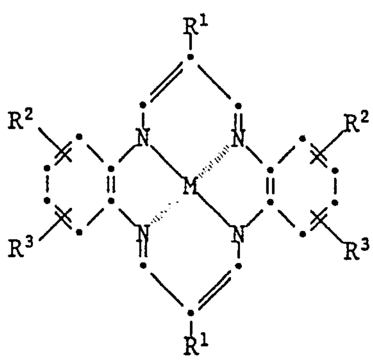

(I)

worin $R^1$ Wasserstoff, $C_1$-$C_{30}$-Alkyl, unsubstituiertes oder durch $C_1$-$C_{12}$-Alkyl, $C_1$-$C_{12}$-Alkoxy oder $C_1$-$C_{12}$-Alkylthio substituiertes Phenyl oder Naphthyl, $R^2$ $C_4$-$C_{30}$-Alkyl, $C_4$-$C_{30}$-Alkoxy, oder $C_4$-$C_{30}$-Alkylthio bedeuten, $R^3$ Wasserstoff darstellt oder die gleiche Bedeutung wie $R^2$ aufweist und M für ein zweiwertiges Metallatom aus der Gruppe Kupfer, Nickel, Eisen, Kobalt, Palladium und Platin oder für 2 Wasserstoffatome steht. Die Schichtsysteme können mittels Oxidation in ihrer elektrischen Leitfähigkeit erhöht werden und eignen sich beispielsweise als leitfähige Ueberzüge, elektronische Bauteile, elektrochrome Anzeigen, Elektroden oder Sensoren.

EP 0 341 201 A2

## Beschreibung

### Ultradünne Schichten von Dibenzotetraaza-[14]-annulen-Derivaten

Die vorliegende Erfindung betrifft Mono- oder Multischichtsysteme enthaltend Dibenzotetraaza-[14]-annulen(DBTAA)-Derivate, ein Verfahren zu deren Herstellung, ausgewählte Verfahren zur Erhöhung der elektrischen Leitfähigkeit der Mono- oder Multischichtsysteme durch Oxidation (Dotierung) sowie die Verwendung dieser Schichtsysteme zur Herstellung von elektrisch leitfähigen Ueberzügen, von elektronischen Bauteilen, als Elektroden, elektrochrome Anzeigen oder Sensoren.

Aus der EP-A 162,804 sind substituierte Dibenzotetraaza-[14]-annulenmetallkomplexe als Elektronendonatoren zur Herstellung von flüssigkristallinen elektrischen Leitern sowie als Bausteine zur Herstellung von thermooptischen und elektrooptischen Anzeigeelementen bekannt.

In Langmuir 1986, 513-519 werden elektrisch leitfähige Langmuir-Blodgett-Filme aus Radikalionensalzen, wie z.B. joddotierten, substituierten Phthalocyaninen beschrieben. Weiter sind aus der EP-A 165,111 elektrisch leitfähige Langmuir-Blodgett-Multischichten aus amphiphilen Charge-Transfer-Komplexen wie z.B. N-Docosyl-pyridinium-Tetracyanochinodimethan bekannt.

Eine wichtige Voraussetzung zur Herstellung von Mono- und Multischichtsystemen nach der Langmuir-Blodgett(LB)-Technik ist erstens die Fähigkeit der Moleküle zur Ausbildung stabiler monomolekularer Filme auf der Wasseroberfläche und zweitens die Fähigkeit der Monoschicht, beim Ein-und/oder Austauchen fester Träger auf diese aufzuziehen.

Weiterhin sollten die Schichtsysteme eine hohe Stabilität an Luft aufweisen.

Es wurde nun überraschend gefunden, dass gewisse Dibenzotetraaza-[14]-annulen-Verbindungen allein und in Mischungen mit Stabilisatoren wie z.B. amphiphilen Verbindungen, langkettigen Kohlenwasserstoffen oder Polymeren stabile Monoschichten bilden, die auf Träger aufgezogen werden können und deren elektrische Leitfähigkeit sich mittels Oxidation erhöhen lässt.

Die vorliegende Erfindung betrifft Mono- oder Multischichtsysteme enthaltend ein Dibenzotetraaza-[14]-annulen-Derivat der Formel I

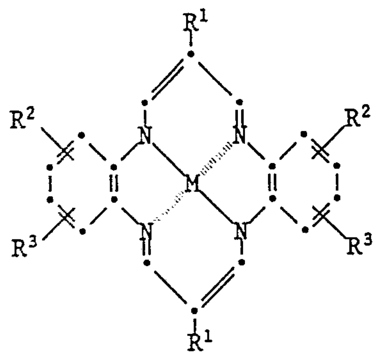

(I)

worin $R^1$ Wasserstoff, $C_1$-$C_{30}$-Alkyl, unsubstituiertes oder durch $C_1$-$C_{12}$-Alkyl, $C_1$-$C_{12}$-Alkoxy, oder $C_1$-$C_{12}$-Alkylthio substituiertes Phenyl oder Naphthyl, $R^2$ $C_4$-$C_{30}$-Alkyl, $C_4$-$C_{30}$-Alkoxy, oder $C_4$-$C_{30}$-Alkylthio bedeuten, $R^3$ Wasserstoff darstellt oder die gleiche Bedeutung wie $R^2$ aufweist und M für ein zweiwertiges Metallatom aus der Gruppe Kupfer, Nickel, Eisen, Kobalt, Palladium und Platin oder für 2 Wasserstoffatome steht.

Als $C_1$-$C_{30}$-Alkyl resp. $C_4$-$C_{30}$-Alkyl bedeuten $R^1$ resp. $R^2$ und $R^3$ sowohl geradkettige wie auch verzweigte Alkylsubstituenten. Bevorzugt werden geradkettige Reste. Ferner können die Alkylreste eine oder mehrere trans-Doppelbindungen oder Dreifachbindungen aufweisen, die nicht in 1-Position stehen. Mehrere trans-Doppelbindungen oder Dreifachbindungen können isoliert oder miteinander konjugiert sein.

Spezifische Beispiele für solche Alkylreste sind Methyl, Ethyl, n-Propyl, Isopropyl, n-Butyl, Isobutyl, n-Pentyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Heneicosyl, n-Docosyl, n-Tetracosyl, n-Hexacosyl, n-Octacosyl und n-Triacontyl oder Allyl, Propargyl, Octadeca-9-transenyl und Pentacosa-10,12-diinyl.

Bedeutet $R^1$ durch Alkyl-, Alkoxy- oder Alkylthiogruppen mit 1 - 12 C-Atomen substituiertes Phenyl oder Naphthyl, so kann dieses einfach oder mehrfach, bevorzugt jedoch einfach, in jeder möglichen Position substituiert sein, wobei die para-Position bevorzugt ist. Bei einer Mehrfachsubstitution können die Substituenten gleich oder verschieden sein. Bezüglich des Alkylteils dieser Substituenten gelten die gleichen Bestimmungen wie für die Alkylreste.

Stellen $R^2$ und $R^3$ Alkoxy- oder Alkylthioreste mit 4 - 30 C-Atomen dar, so kann es sich dabei um geradkettige oder verzweigte Alkylgruppen handeln, wobei die geradkettigen bevorzugt sind.

Bevorzugte Metalle M sind Kupfer und Nickel.

Bevorzugt sind Mono- oder Multischichtsysteme, die Verbindungen der Formel I enthalten, worin $R^1$ Wasserstoff oder $C_1$-$C_{30}$-Alkyl, $R^2$ $C_4$-$C_{30}$-Alkyl, $C_4$-$C_{30}$-Alkoxy oder $C_4$-$C_{30}$-Alkylthio bedeuten, $R^3$

Wasserstoff darstellt oder die gleiche Bedeutung wie $R^2$ aufweist und M für ein zweiwertiges Metallatom aus der Gruppe Kupfer, Nickel, Eisen, Kobalt, Palladium und Platin oder für 2 Wasserstoffatome steht.

Besonders bevorzugt sind Mono- oder Multischichtsysteme, die Verbindungen der Formel I enthalten, worin $R^1$ Wasserstoff oder $C_1$-$C_{30}$-Alkyl, $R^2$ $C_4$-$C_{30}$-Alkoxy oder $C_4$-$C_{30}$-Alkylthio, $R^3$ Wasserstoff, $C_4$-$C_{30}$-Alkoxy oder $C_4$-$C_{30}$ Alkylthio, und M Kupfer oder Nickel bedeuten.

Insbesondere bevorzugt sind Mono- oder Multischichtsysteme enthaltend Verbindungen der Formel I, worin $R^1$ $C_1$-$C_{30}$ Alkyl und $R^2$ und $R^3$, gleich oder verschieden, $C_4$-$C_{30}$ Alkoxy bedeuten oder $R^1$ $C_1$-$C_{30}$-Alkyl, $R^2$ $C_4$-$C_{30}$-Alkylthio und $R^3$ Wasserstoff darstellen. M bedeutet dabei Kupfer oder Nickel.

Unter dem Begriff "Mono- oder Multischichtsystem" ist ganz allgemein jede Anordnung zu verstehen, welche die Verbindungen der Formel I in Form einer dünnen Schicht oder einer Folge von dünnen Schichten enthält. Unter "dünner Schicht" ist im Rahmen dieser Beschreibung eine Schicht zu verstehen, welche die Dicke von einer oder einigen Molekküllagen besitzt.

Bei solchen Schichtsystemen kann es sich beispielsweise um sogenannte "Cast Bilayer" Filme enthaltend Verbindungen der Formel I handeln. Diese Technik wird beispielsweise von T. Kunitake et al. in Thin Solid Films, 121, 189-91 (1984) und von M. Shimomura et al. in Ber. Bunsenges. Phys. Chem., 87, 1134-43 (1983) beschrieben.

Vorzugsweise handelt es sich bei solchen Mono- oder Multischichtsystemen um eine monomolekulare Schicht oder um Folgen von monomolekularen Schichten enthaltend Verbindungen der Formel I, die durch Uebertragung auf feste Träger nach dem Langmuir-Blodgett Verfahren (LB-Verfahren) erhältlich sind.

Die Verbindungen der Formel I sind teilweise bekannt und lassen sich nach den z.B. in der EP-A 162,804, DE-A 2,260,761, DE-A 2,214,336 und EP-A 73,456 beschriebenen Methoden darstellen.

Die Verbindungen der Formel I, worin $R^1$ Wasserstoff oder $C_1$-$C_{30}$-Alkyl, $R^2$ $C_4$-$C_{30}$-Alkylthio und $R^3$ Wasserstoff bedeuten, sind neu und stellen ebenfalls einen Gegenstand der vorliegenden Erfindung dar.

Aus den Verbindungen der Formel I lassen sich überraschenderweise stabile monomolekulare Schichten an der Wasser/Luft Grenzfläche herstellen. Dazu trägt man in an sich bekannter Weise eine geringe Menge einer Lösung einer Verbindung der Formel I in einem vorzugsweise niedrigsiedenden und nicht mit Wasser mischbaren Lösungsmittel auf eine Wasseroberfläche auf, lässt das Lösungsmittel verdampfen und komprimiert den entstandenen Film, so dass eine stabile monomolekulare Schicht auf der Wasseroberfläche entsteht.

Die Subphase, auf der die monomolekulare Schicht ausgebildet wird, besteht in der Regel aus mehrfach destilliertem oder deionisiertem und filtriertem Wasser, dem gegebenenfalls zur Stabilisierung der Filme geringe Mengen von Salzen, beispielsweise von $CdCl_2$ oder $BaCl_2$, zugesetzt sind. Ferner kann die Subphase Puffersubstanzen, beispielsweise $NaHCO_3$, enthalten. Diese Modifikationen sind dem Fachmann bekannt und werden, je nach der Art der filmbildenden Substanzen, ausgewählt.

Die Stabilität der Filme lässt sich bekanntermassen durch Wahl der experimentellen Parameter beeinflussen. So kann man beispielsweise relativ labile Filme aus Verbindungen der Formel I durch Kühlen der Subphase stabilisieren oder man verwendet Verbindungen der Formel I in Kombination mit anderen geeigneten amphiphilen Verbindungen, die monomolekulare Filme zu stabilisieren vermögen.

Bevorzugte amphiphile Verbindungen sind beispielsweise langkettige Fettsäuren wie z.B. Palmitinsäure, Stearinsäure, Arachinsäure, Behensäure oder Melissinsäure oder Ester dieser Fettsäuren, insbesondere die Methylester; langkettige Sulfonsäuren und Phosphonsäuren, deren Ester sowie langkettige Sulfate und Phosphate; langkettige Alkohole wie z.B. n-Pentadecanol, n-Octadecanol, n-Eicosanol oder n-Triacontanol; langkettige primäre Amine wie z.B. n-Hexadecylamin, n-Eicosylamin, n-Docosylamin oder n-Triacontylamin oder langkettige Amide wie z.B. Stearinsäureamid. Unter "langkettig" wird eine Kohlenstoffkette mit mindestens 12 C-Atomen, insbesondere mit 15 - 30 C-Atomen, verstanden.

Neben den gesättigten amphiphilen Verbindungen können auch ethylenisch-oder acetylenisch-ungesättigte Derivate eingesetzt werden. Dabei können die Doppelbindungen isoliert oder konjugiert, bei mehrfach ungesättigten Derivaten bevorzugt konjugiert, sein. Beispiele dafür sind Parinarsäure, ω-Tricosensäure oder Pentacosa-10,12-diinsäure.

Die Säuren werden bevorzugt in Form von Salzen, insbesondere Cd-Salzen, eingesetzt.

Ferner sind langkettige aliphatische Kohlenwasserstoffe wie z.B. Hexadecan, Octadecan oder Eicosan sowie Polymere wie z.B. Polyoctadecylacrylat oder polymere Phthalocyaninatosiloxane ebenfalls zur Stabilisierung von monomolekularen Schichten geeignet.

Bevorzugte amphiphile Verbindungen zur Stabilisierung sind gesättigte oder ungesättigte Fettsäuren, deren Salze oder deren Ester.

Daher betrifft die vorliegende Erfindung auch Mono- oder Multischichtsysteme, die zusätzlich zu den Verbindungen der Formel I eine stabilisierende Komponente enthalten.

Die Verbindungen der Formel I sind in der Regel zu mindestens 1 Gew.-%, bezogen auf die Gesamtmischung, in solchen Mischungen vorhanden.

Monomolekulare Filme enthaltend Verbindungen der Formel I und gegebenenfalls weitere geeignete amphiphile Verbindungen lassen sich überraschenderweise nach dem LB-Verfahren gut von der Wasseroberfläche auf feste Träger übertragen. Dazu taucht man in an sich bekannter Weise einen festen Träger durch einen komprimierten, monomolekularen Film auf einer Wasseroberfläche und überträgt dadurch besagten Film auf den Träger.

Vorzugsweise enthalten solche Filme 1 - 95 Mol %, insbesondere 20 - 75 Mol %, an Verbindungen der

Formel I in Kombination mit weiteren, zur Stabilisierung von monomolekularen Filmen befähigten Komponenten, wie z.B. amphiphilen Verbindungen, langkettigen Kohlenwasserstoffen oder Polymeren.

Durch mehrmaliges Ein- und Austauchen lassen sich auf diese Weise Multischichtsysteme herstellen.

Die Schicht auf der Wasseroberfläche kann nach jedem Tauchvorgang ausgetauscht werden, so dass unterschiedliche Folgen von Schichten auf dem Träger herstellbar sind.

Die Verfahrensweisen zur Herstellung von Multischichten sind dem Fachmann auf dem Gebiet der LB-Systeme an sich bekannt und beispielsweise in "Techniques Of Chemistry, Physical Methods Of Chemistry, Vol. I, Part 3B, S. 666-671; Editor: A. Weissberger & P. Rossiter" beschrieben.

Als feste Träger für das LB-Verfahren kommen unterschiedlichste hydrophile oder hydrophobe Substrate mit mikroskopisch planarer Oberfläche in Frage. Beispiele dafür sind Metalle, wie Aluminium, Kupfer, Silber oder Gold, Halbleiter, wie Germanium, Silizium oder GaAs, anorganische Materialien, wie Glas, Indium-Zinn-Oxid (ITO)-Glas (Firma Balzers, Liechtenstein), Quarz, ZnSe oder $Si_2N_3$ oder Kunststoffe, wie Teflon®, Polyethylen, Polymethylmethacrylat, Polystyrol oder Polyester. Man kann auch hydrophobierte Träger benutzen, beispielsweise Glas oder Quarz, das mit Silanen wie z.B. Trichlormethylsilan, Dichlordimethylsilan oder Trichloroctadecylsilan vorbehandelt oder mit einigen Schichten Cd-Arachidat vorbeschichtet wurde.

Ein weiterer Gegenstand der Erfindung betrifft ein Verfahren zur Herstellung von Mono- oder Multischichtsystemen umfassend im wesentlichen die Schritte

i) Herstellung einer monomolekularen Schicht aus einer Verbindung der Formel I oder aus einem Gemisch einer Verbindung der Formel I in Kombination mit weiteren zur Stabilisierung solcher Schichten befähigten amphiphilen Verbindungen, langkettigen Kohlenwasserstoffen oder Polymeren und

ii) Uebertragung dieser Schicht auf einen festen Träger gemäss dem Langmuir-Blodgett Verfahren durch ein- oder mehrfaches Ein- und/oder Austauchen besagten Trägers durch die Schicht.

Solche Monoschichten der Verbindung der Formel I lassen sich sukzessive nach dem LB-Verfahren übertragen. Diese Schichten können unmittelbar aufeinander folgen oder aber mit Schichten aus verschiedenen schichtbildenden Materialien alternieren.

Vorzugsweise werden Mischschichten aus Verbindungen der Formel I und langkettigen gesättigten Carbonsäuren, insbesondere geradkettigen, mit 18 - 22 C-Atomen, oder deren Salzen oder Methylestern übertragen.

Durch Behandlung mit geeigneten Elektronenakzeptoren lassen sich mit den Verbindungen der Formel I in den Schichten Donor-Akzeptor Komplexe herstellen, die eine Erhöhung der elektrischen Leitfähigkeit der Schichtsysteme bewirken. Bei den Donor-Akzeptor Komplexen kann es sich gegebenenfalls um Radikalionensalze handeln, bei denen ein vollständiger Ladungstransfer stattgefunden hat.

Unter geeigneten Elektronenakzeptoren versteht man im Rahmen dieser Beschreibung solche Verbindungen, die aufgrund ihres Oxidationspotentials den Donor oxidieren können.

Geeignete Elektronenakzeptoren sind z.B. Halogene, wie Iod, Brom oder Chlor; Polybromide oder Polyiodide; Stickstoffoxide oder organische Akzeptoren wie z.B. TCNQ. Bevorzugt verwendet man Halogene, insbesondere Iod, und Polyiodide.

Die Behandlung (Dotierung) des Mono- oder Multischichtsystems aus den Verbindungen der Formel I kann durch direkten Kontakt des hergestellten Schichtsystems mit dem Elektronenakzeptor in der Gasphase erfolgen, beispielsweise durch Dotieren eines Schichtsystems mit Ioddampf.

Die Dotierung des Mono- oder Multischichtsystems aus den Verbindungen der Formel I kann ferner durch direkten Kontakt mit einer wässrigen Lösung enthaltend einen Elektronenakzeptor erfolgen. Dabei dringt das wässrig gelöste Dotierungsmittel überraschenderweise in das Schichtsystem ein, ohne dieses zu zerstören, und bewirkt eine Erhöhung der elektrischen Leitfähigkeit.

Die Erfindung betrifft daher auch ein Verfahren zur Erhöhung der elektrischen Leitfähigkeit von Mono- oder Multischichtsystemen umfassend die oben definierten Schritte i) und ii) sowie iii) Eintauchen des gebildeten Mono- oder Multischichtsystems in eine wässrige Lösung enthaltend einen Elektronenakzeptor für die Verbindung der Formel I, welcher eine Oxidation besagter Verbindung bewirkt.

Weiter können auf elektrisch leitenden Trägern, wie z.B. Indium-Zinn-Oxid-(ITO)-Glas oder Metallen, aufgezogene Mono- oder Multischichtsysteme der Donormoleküle in einen elektrisch leitfähigen Zustand überführt werden, indem man die Schichtsysteme als Anoden schaltet, diese in eine Elektrolytlösung eintaucht und eine elektrische Spannung anlegt. Ueberraschenderweise sind die so oxidierten Donormoleküle sowohl in der wässrigen Elektrolytlösung als auch an der Luft genügend stabil.

Daher betrifft die Erfindung ebenfalls ein Verfahren zur Herstellung von elektrisch leitfähigen Mono- oder Multischichtsystemen umfassend die Schritte

i) Herstellung einer monomolekularen Schicht aus einer Verbindung der Formel I, oder aus einem Gemisch einer Verbindung der Formel I in Kombination mit weiteren zur Stabilisierung solcher Schichten befähigten amphiphilen Verbindungen,

ii) Uebertragung dieser Schicht auf einen festen Träger mit einer elektrisch leitfähigen Oberfläche durch ein- oder mehrmaliges Tauchen besagten Trägers durch die Schicht, und

iii) elektrochemische Oxidation besagten Schichtsystems durch Eintauchen besagten beschichteten Trägers in eine Elektrolytlösung, in die auch eine Gegenelektrode eintaucht, und Schalten besagten Trägers als Anode unter Anlegen eines Potentials, so dass die Verbindung der Formel I in besagtem Schichtsystem unter Einbau von Gegenionen aus dem Elektrolyten oxidiert wird.

Ein Vorteil dieses Verfahrens ist darin zu sehen, dass eine grosse Zahl verschiedener Gegenionen in das

Schichtsystem eingebaut werden kann. Beispiele dafür sind anorganische Anionen, wie $ClO_4^-$, $BF_4^-$, $PF_6^-$, $SbF_6^-$, $SbCl_4^-$, $SbCl_6^-$, $F^-$, $Cl^-$, $Br^-$, $I^-$ oder $I_3^-$, oder organische Anionen, wie Tetracyanochinodimethan⁻, Tetracyanoethylen⁻, Alkyl-, Aryl-, Alkaryl-, Aralkyl-, Fluoralkyl- oder Fluoralkarylsulfonat, -phosphat oder -phosphonat oder Heteroarylsulfonate, wie Pyrrolopyrroldisulfonat.

Ferner kann man auch eine bereits auf der Wasseroberfläche dotierte Monoschicht sukzessive auf einen Träger übertragen. Die Dotierung der Monoschicht erfolgt in der Regel durch Zugabe des Dotierungsmittels zur Subphase. Dabei bildet sich an der Wasser/Luft Grenzfläche ein Donor- Akzeptor Komplex aus den Verbindungen der Formel I und dem Dotierungsmittel aus. Dieser Komplex kann überraschenderweise mittels des LB-Verfahrens auf feste Träger übertragen werden.

Die Erfindung betrifft daher auch ein Verfahren zur Erhöhung der elektrischen Leitfähigkeit von Mono- oder Multischichtsystemen umfassend die Schritte

i) Herstellung einer monomolekularen Schicht aus einer Verbindung der Formel I oder aus einem Gemisch einer Verbindung der Formel I in Kombination mit weiteren zur Stabilisierung solcher Schichten befähigten amphiphilen Verbindungen, langkettigen Kohlenwasserstoffen oder Polymeren auf einer wässrigen Lösung eines Elektronenakzeptors.

ii) Uebertragung der dabei gebildeten Donor-Akzeptor-Komplex-Schicht auf einen festen Träger gemäss dem Langmuir-Blodgett Verfahren durch ein-oder mehrfaches Ein- und/oder Austauchen dieses Trägers durch die Schicht.

Die so erhaltenen Donor-Akzeptor Komplexe aus den Verbindungen der Formel I und dem Dotierungsmittel wie z.B. $KI_3$ als starkem Oxidationsmittel, stellen Dibenzotetraaza-[14]-annulen-Radikalionensalze dar.

So betrifft die Erfindung auch ein Verfahren zur Herstellung von Dibenzotetraaza-[14]-annulen-Radikalionensalzen dadurch gekennzeichnet, dass bei der Herstellung einer monomolekularen Schicht aus einer Verbindung der Formel I in die Subphase ein starkes Oxidationsmittel zugegeben wird.

Mit den Verbindungen der Formel I lassen sich neben Mono- und Multischichtsystemen nach dem Langmuir-Blodgett-Verfahren auch Filme aus molekularen Aggregaten in Form von Mischliposomen oder mikrokristalline Filme herstellen.

Die Mono- oder Multischichtsysteme enthaltend Verbindungen der Formel I eignen sich zur Herstellung von elektrisch leitfähigen Ueberzügen, von elektrischen Bauteilen, elektrochromen Anzeigen, Elektroden und Sensoren.

Die Erfindung betrifft auch die Verwendung dieser Mono- oder Multischichtsysteme für die oben erwähnten Zwecke.

Beispiel 1: (gemäss Beispiel 21 aus EP-A 162,804)

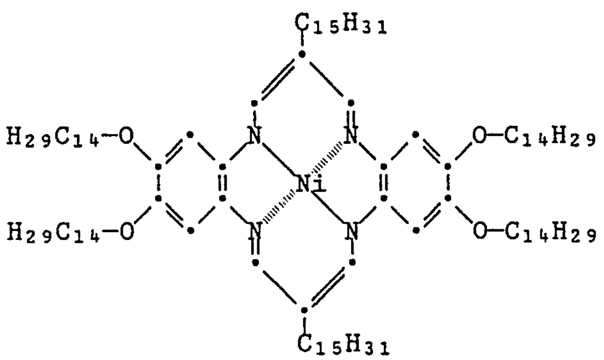

Verbindung 1

5 mMol 4,5-Bis-tetradecyloxy-1,2-phenylendiamin werden in 25 ml entgastem Dimethylformamid (DMF) gelöst und auf 65°C erwärmt. Dann werden 2,5 mMol Nickel(II)acetathydrat zugegeben. Nach 45 Minuten Rühren werden 5,5 mMol 2-Pentadecyl-3-dimethylaminoacrolein in 5 ml entgastem DMF gelöst zugetropft. Darauf wird 16 Stunden bei 120°C gerührt, wobei gleichzeitig langsam Stickstoff durchgeleitet wird, um das gebildete Dimethylamin zu entfernen. Das Reaktionsgemisch wird auf Raumtemperatur abgekühlt und der kristalline Niederschlag abgenutscht, mit $H_2O$ und Ethanol gewaschen und getrocknet. Zur Reinigung wird das Rohprodukt mit kaltem Chloroform gewaschen und anschliessend aus Chloroform umkristallisiert.

VIS-Spektrum:
$\lambda_{max}$ 462 nm
log ε 4,85

Beispiel 2:

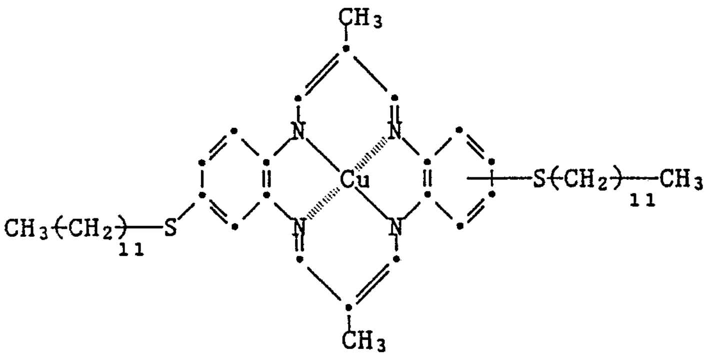

Verbindung 2

Bei 60° C wird 1 g Kupferacetat in 25 ml Dimethylformamid (DMF) gelöst und die Lösung mit Stickstoff gesättigt. Zu dieser Lösung gibt man 3,08 g 4-Dodecylthio-1,2-phenylendiamin und erhitzt unter Rühren auf 100° C. Bei dieser Temperatur tropft man anschliessend eine Lösung von 1,15 g 3-Ethoxy-2-methylacrolein in 5 ml DMF langsam zu. Es bildet sich eine dunkelbraune Suspension, die man noch 22 h bei 120° C weiterrührt. Nach Abkühlung auf 0° C wird das braune Produkt abfiltriert, mit Ethanol und Wasser gewaschen und bei 40° C im Vakuum getrocknet. Ausbeute 2,3 g (~ 60 %). Zur Reinigung des Produktes wird zweimal aus DMF umkristallisiert.

Analyse:
berechnet: C 67,87 %; H 8,54 %; N 7,20 %; S 8,23 %; Cu 8,16 %
gefunden: C 67,89 %; H 8,64 %; N 7,40 %; S 7,88 %; Cu 8,34 %.
VIS-Spektrum ($CHCl_3$): 420 (sh), 440, 470 (sh), 499 nm
MS: cluster bei 778 ($M^+$), 609 ($-C_{12}H_{25}$), 577 ($-SC_{12}H_{25}$)

Beispiel 3:
Man spreitet eine Lösung von Verbindung 1 in Chloroform (ca. 0,5 mg/ml) bei konst. Temperatur (T = 15° C) auf der Wasseroberfläche eines kommerziellen Langmuir-Troges (MGW-Lauda. Grösse: 70x15x0,6 cm, präparative Ausführung). Als Subphase dient entionisiertes Wasser, das mit einer Milli-Q-Anlage (Millipore Corp.) weiter gereinigt wurde (spez. elektr. Widerstand $\rho > 18$ MΩ cm). Die verwendeten Lösungsmittel sind von spektroskopischer Qualität. Nach dem Spreiten bildet sich ein monomolekularer Film, den man mit einer Geschwindigkeit von 1,25 cm/min. zusammenschiebt, wobei der Filmdruck (Schub) $\pi$ [mN/m] in Abhängigkeit der Fläche pro Molekül A [$nm^2$/Molekül] registriert wird (Schub-Flächen-Isotherme). Die Monoschicht hat beim Kollapspunkt einen Filmdruck $\pi = 55$ mN/m und eine Fläche A = 0,29 $nm^2$/Molekül.

Beispiel 4:
Es wird wie in Beispiel 3 verfahren. Anstelle von Verbindung 1 wird Verbindung 2 verwendet. Man erhält eine festkondensierte Monoschicht, die beim Kollapspunkt einen Filmdruck $\pi = 40$ mN/m und eine Fläche A = 0,30 $nm^2$/Molekül besitzt.

Beispiel 5:
Eine Lösung von Verbindung 1 (siehe Bsp. 3) wird mit einer Lösung von Arachinsäure (Fluka, puriss.) in Chloroform (ca. 1 mg/ml) so gemischt, dass eine Mischlösung entsteht, die 17 mol % der Verbindung 1 enthält. Diese Mischlösung wird, wie in Beispiel 3 beschrieben, gespreitet und komprimiert. Als Subphase verwendet man eine 3 x $10^{-4}$ M Lösung von $CdCl_2$ (Merck, purum) in Millipore-Wasser (s. Beispiel 3), die man mit $NaHCO_3$ (Merck, p.a.) auf etwa pH. 6,8 einstellt. Die erhaltene, festkondensierte Monoschicht hat beim Kollapspunkt einen Filmdruck von $\pi = 20$ mN/m und eine Fläche A = 0,34 $nm^2$/Molekül.

Beispiel 6:
Eine Lösung von Verbindung 2 in Chloroform (ca. 0,25 mg/ml) wird mit einer Lösung von Methylarachidat (Fluka, puriss.) in Chloroform (1 mg/ml) so gemischt, dass eine Mischlösung entsteht, die 70 mol % der Verbindung 2 enthält. Diese Mischlösung wird, wie in Beispiel 3 beschrieben, gespreitet und komprimiert. Die erhaltene, festkondensierte Monoschicht hat beim Kollapspunkt einen Filmdruck von $\pi = 30$ mN/m und eine Fläche von A = 0,27 $nm^2$/Molekül.

Beispiel 7:
Wie in Beispiel 5 beschrieben, wird eine Mischlösung hergestellt, auf die $CdCl_2$-Subphase eines Langmuir-Troges gespreitet und komprimiert (s. Bsp. 3), bis ein Filmdruck von 10,5 mN/m erreicht ist. Bei konst. Druck wartet man, bis keine Flächenabnahme mehr zu verzeichnen ist, und überträgt anschliessend den monomolekularen Film nach der Langmuir-Blodgett (LB)-Technik auf hydrophobisierte Glas- oder Quarzplättchen*). Die Uebertragung erfolgt mit einer Geschwindigkeit von 2 - 3 cm/min. Es werden 30 Schichten aufgezogen. Die so erhaltenen Multischichten besitzen Y-Orientierung und sind orange gefärbt.

(*)Die Glas- oder Quarzplättchen werden in einer heissen Lösung von $K_2S_2O_8$ (Fluka, puriss.) in $H_2SO4$ (Merck, p.a. 95 - 97 %) und anschliessend in $10^{-3}$ M NaOH (Merck, p.a.) gereinigt, danach gut mit Millipore-Wasser gespült. Dann werden sie hydrophobisiert entweder durch Silanisierung (Behandlung mit Octadecyltrichlorsilan (Merck, 98 %)) oder durch Vorbeschichten mit drei Lagen Cd-Arachidat (Fluka, puriss.).

UV/VIS-Absorption: (Lambda 7, Perkin Elmer)
$\lambda_{max}$ (Multischicht): 441 nm ($\varepsilon$ = 13990 $cm^{-1}$)

Beispiel 8:

Eine Lösung von Verbindung 2 in Chloroform (ca. 0,25 mg/ml) wird gemäss Beispiel 3 gespreitet und komprimiert, bis ein Filmdruck von $\pi$ = 16,5 mN/m erreicht ist. Der monomolekulare Film wird, wie in Beispiel 7 beschrieben, auf hydrophobisierte Glas- oder Quarzträger über tragen. Es werden 18 - 30 Schichten aufgezogen. Die Multischichten haben Y-Orientierung und sind orange gefärbt. Aus Röntgenbeugungsuntersuchungen ergibt sich ein Doppelschichtabstand $d_{001}$ = 3,15 nm.

UV/VIS-Absorption:

| | |
|---|---|
| $\lambda_{max}$ (Multischicht): | 292 nm (sh) |
| | 420 nm ($\varepsilon$ = 31 310 $cm^{-1}$) |
| | 500 nm (sh) |

Beispiel 9:

Eine gemäss Beispiel 6 hergestellte Mischlösung wird, wie in Beispiel 3 beschrieben, gespreitet und komprimiert, bis ein Filmdruck von $\pi$ = 20 mN/m erreicht ist. Dann wird der monomolekulare Film gemäss Beispiel 7 auf hydrophobisierte Glas- oder Quarzplättchen übertragen. Es werden 30 - 54 Schichten aufgezogen. Die Multischichten haben Y-Orientierung und sind orange gefärbt. Aus Röntgenbeugungsuntersuchungen ergibt sich ein Doppelschichtabstand $d_{001}$ = 3,08 nm.

UV/VIS-Absorption:

| | |
|---|---|
| $\lambda_{max}$(Multischicht): | 302 nm ($\varepsilon$ = 46 970 $cm^{-1}$), |
| | 412 nm ($\varepsilon$ = 21 100 $cm^{-1}$), |
| | 496 nm (sh), 548 nm (sh) |

Beispiel 10:

Für Leitfähigkeitsmessungen in der Schichtebene werden Multischichten nach Beispiel 7 hergestellt (20 Schichten). Auf die oberste Schicht werden im Vakuum ($10^{-3}$ - $10^{-5}$ mbar) mittels einer Maske Goldelektroden aufgedampft. Diese werden mit Golddraht und Pt-Paste kontaktiert. Zur Dotierung werden die Proben während einer Stunde einer iodgesättigten Argonatmosphäre ausgesetzt. Bei der Iodbehandlung verfärben sich die Multischichten und werden in Reflexion metallisch glänzend. Die elektrische Leitfähigkeit $\sigma$ [S/cm] wird während des Dotierens mit einem Elektrometer (Keithley) bestimmt.

| | | |
|---|---|---|
| $\sigma$ (undotiert) | = | 2,0 · $10^{-7}$ S/cm $\sigma$ |
| | | (dotiert) = 4,0 · $10^{-6}$ S/cm |
| $\lambda_{max}$ (undotiert) | = | 441 nm ($\varepsilon$ = 13 990 $cm^{-1}$) |
| $\lambda_{max}$ (dotiert) | = | 456 nm ($\varepsilon$ = 15 980 $cm^{-1}$) |
| | | 580 nm ($\varepsilon$ = 6 950 $cm^{-1}$) |

Beispiel 11:

Es werden Multischichten nach Beispiel 8 hergestellt. Sie werden, wie in Beispiel 10 beschrieben, kontaktiert und während 12 Stunden mit Iod dotiert. Bei der Iodbehandlung verfärben sich die Multischichten und werden in Reflexion metallisch glänzend. Die elektrische Leitfähigkeit in der Schichtebene wird während des Dotierens mit einem Elektrometer (Keithley) bestimmt.

| | | |
|---|---|---|
| σ (undotiert) | = | $7{,}4 \cdot 10^{-6}$ S/cm σ (dotiert) = $5{,}3 \cdot 10^{-4}$ S/cm |
| $\lambda_{max}$ (undotiert) | = | 292 nm (sh); 420 nm (ε = 31 310 $cm^{-1}$); 500 nm (sh). |
| $\lambda_{max}$ (dotiert) | = | 378 nm (ε = 162 330 $cm^{-1}$) |

Beispiel 12:

Es werden Multischichten nach Beispiel 9 hergestellt, wobei 30 Monoschichten aufgezogen werden. Die Multischichten werden, wie in Beispiel 10 beschrieben, kontaktiert und anschliessend während mindestens 1 Stunde einer iodgesättigten Argonatmosphäre ausgesetzt. Bei der Iodbehandlung verfärben sich die Multischichten und werden in Reflexion metallisch glänzend. Aus Röntgenuntersuchungen ergibt sich ein Doppelschichtabstand $d_{001}$ = 3,17 nm für eine ioddotierte Multischicht. Während des Dotierens wird die Zunahme der elektrischen Leitfähigkeit in der Schichtebene bestimmt.

| | |
|---|---|
| σ (undotiert): | $6{,}7 \cdot 10^{-6}$ S/cm |
| σ (dotiert): | $2{,}7 \cdot 10^{-4}$ S/cm |
| $\lambda_{max}$ (dotiert): | 294 nm (ε = 122 190 $cm^{-1}$), 381 nm (109 040 $cm^{-1}$) |

Beispiel 13:

Man stellt Multischichten nach Beispiel 9 her, wobei 30 Monoschichten aufgezogen werden. Anschliessend taucht man die Proben während 15 Stunden in eine $5{,}3 \cdot 10^{-4}$ M Lösung von $KI_3$ (ICN, Biomedicals, Inc.) in Wasser ein, wobei sich die Multischichten dunkelorange verfärben und in Reflexion metallisch glänzend werden. Aus Röntgenbeugungsuntersuchungen ergibt sich ein Doppelschichtabstand $d_{001}$ = 3,19 nm. Die Multischichten werden, wie in Beispiel 10 beschrieben, mit Goldelektroden kontaktiert. Dann wird die elektrische Leitfähigkeit σ in der Schichtebene mit einem Elektrometer (Keithley) gemessen.

| | | |
|---|---|---|
| σ = $1{,}1 \cdot 10^{-4}$ S/cm $\lambda_{max}$ [nm] | = | 295 (ε = 85 290 $cm^{-1}$) 381 (ε = 80 590 $cm^{-1}$) |

Beispiel 14:

Es werden Multischichten gemäss Beispiel 9 hergestellt, wobei 15 Schichten auf ITO-Glasplättchen [Glasplättchen, die auf einer Seite mit Indium-Zinn-Oxid (ITO) beschichtet sind; Hersteller: Firma Balzers AG, Liechtenstein; zur Reinigung werden die ITO-Glasplättchen während 5-10 Minuten bei RT in Chloroform mit Ultraschall behandelt] aufgezogen werden. Die Multischicht auf der nichtleitenden Rückseite des ITO-Glasplättchens wird abgewischt. Dann wird die ITO-Probe als Anode geschaltet, in eine $10^{-3}$ M $LiClO_4$-Lösung (FLUKA puriss.) eingetaucht und während 2 Std. bei 1,5 V elektrochemisch oxidiert. Die Oxidation lässt sich spektrometrisch verfolgen.

Die spektroskopischen Daten der Multischicht vor bzw. nach der Oxidation sind in Tabelle 1 aufgeführt.

Tabelle 1

| | $\lambda_{max}$[nm] | (ε [$cm^{-1}$] |
|---|---|---|
| undotiert | 420 | (27 490) |
| | 544 | (sh) |
| oxidiert | 380 | (63 100) |

**Patentansprüche**

1. Mono- oder Multischichtsysteme enthaltend ein Dibenzo-tetraaza[14]-annulen-Derivat der Formel I

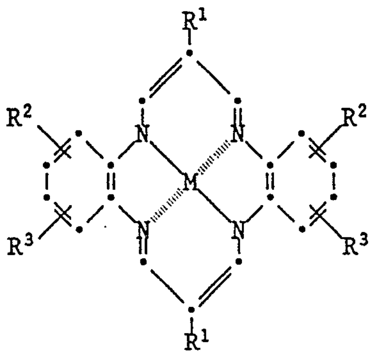

(I)

worin $R_1$ Wasserstoff, $C_1$-$C_{30}$-Alkyl, unsubstituiertes oder durch $C_1$-$C_{12}$-Alkyl, $C_1$-$C_{12}$-Alkoxy oder $C_1$-$C_{12}$-Alkylthio substituiertes Phenyl oder Naphthyl, $R^2$ $C_4$-$C_{30}$-Alkyl, $C_4$-$C_{30}$-Alkoxy oder $C_4$-$C_{30}$-Alkylthio bedeuten, $R^3$ Wasserstoff darstellt oder die gleiche Bedeutung wie $R^2$ aufweist und M für ein zweiwertiges Metallatom aus der Gruppe Kupfer, Nickel, Eisen, Kobalt, Palladium und Platin oder für 2 Wasserstoffatome steht.

2. Mono- oder Multischichtsysteme gemäss Anspruch 1, worin in der Verbindung der Formel I $R^1$ Wasserstoff oder $C_1$-$C_{30}$-Alkyl, $R^2$ $C_4$-$C_{30}$-Alkyl, $C_4$-$C_{30}$-Alkoxy oder $C_4$-$C_{30}$-Alkylthio bedeuten, $R^3$ Wasserstoff darstellt oder die gleiche Bedeutung wie $R^2$ aufweist und M für ein zweiwertiges Metallatom aus der Gruppe Kupfer, Nickel, Eisen, Kobalt, Palladium und Platin oder für 2 Wasserstoffatome steht.

3. Mono- oder Multischichtsysteme gemäss Anspruch 1, worin in der Verbindung der Formel I $R^1$ Wasserstoff oder $C_1$-$C_{30}$-Alkyl, $R^2$ $C_4$-$C_{30}$-Alkoxy oder $C_4$-$C_{30}$-Alkylthio, $R^3$ Wasserstoff, $C_4$-$C_{30}$-Alkoxy oder $C_4$-$C_{30}$-Alkylthio und M Kupfer oder Nickel bedeuten.

4. Mono- oder Multischichtsysteme gemäss Anspruch 1, worin diese zusätzlich zu den Verbindungen der Formel I eine stabilisierende Komponente enthalten.

5. Mono- oder Multischichtsysteme gemäss Anspruch 4, worin die stabilisierende Komponente eine amphiphile Verbindung, einen langkettigen Kohlenwasserstoff oder ein Polymer darstellt.

6. Mono- oder Multischichtsysteme gemäss Anspruch 5, worin die amphiphile Verbindung gesättigt oder ungesättigt ist und eine Fettsäure, ein Fettsäuresalz, einen Fettsäureester, eine Sulfonsäure, eine Phosphonsäure, deren Ester, ein Sulfat, ein Phosphat, einen Alkohol, ein primäres Amin oder ein Amid mit mindestens 12 C-Atomen darstellt.

7. Mono- oder Multischichtsysteme gemäss Anspruch 6, worin die amphiphile Verbindung eine Fettsäure, ein Fettsäuresalz oder einen Fettsäureester bedeutet.

8. Mono- oder Multischichtsysteme gemäss Anspruch 4, worin der Anteil an Verbindungen der Formel I 1 - 95 Mol. % in Kombination mit einer stabilisierenden Komponente beträgt.

9. Verbindungen der Formel I nach Anspruch 1, worin $R^1$ Wasserstoff oder $C_1$-$C_{30}$-Alkyl, $R^2$ $C_4$-$C_{30}$-Alkylthio und $R^3$ Wasserstoff bedeuten.

10. Verfahren zur Herstellung von Mono- oder Multischichtsystemen umfassend die Schritte

i) Herstellung einer monomolekularen Schicht aus einer Verbindung der Formel I gemäss Anspruch 1 oder aus einem Gemisch einer Verbindung der Formel I in Kombination mit weiteren zur Stabilisierung solcher Schichten befähigten amphiphilen Verbindungen, langkettigen Kohlenwasserstoffen, oder Polymeren und

ii) Uebertragung dieser Schicht auf einen festen Träger gemäss dem Langmuir-Blodgett Verfahren durch ein- oder mehrfaches Ein- und/oder Austauchen besagten Trägers durch die Schicht.

11. Verfahren zur Erhöhung der elektrischen Leitfähigkeit von Mono- oder Multischichtsystemen durch Behandlung von Verbindungen der Formel I enthaltenden Schichtsystemen mit einem starken Oxidationsmittel als Elektronenakzeptor.

12. Verfahren gemäss Anspruch 11, worin als Oxidationsmittel Halogene, Polybromide, Polyiodide, Stickstoffoxide oder organische Akzeptoren eingesetzt werden.

13. Verfahren gemäss Anspruch 11, worin die Behandlung der Verbindungen der Formel I mit dem Oxidationsmittel in der Gasphase oder in einer Lösung erfolgt.

14. Verfahren zur Herstellung von elektrisch leitfähigen Mono- oder Multischichtsystemen umfassend Schritt i) gemäss Anspruch 10, und

ii) Uebertragung dieser Schicht auf einen festen Träger mit einer elektrisch leitfähigen Oberfläche durch ein- oder mehrmaliges Tauchen besagten Trägers durch die Schicht, und

iii) elektrochemische Oxidation besagten Schichtsystems durch Eintauchen besagten beschichteten Trägers in eine Elektrolytlösung, in die auch eine Gegenelektrode eintaucht, und Schalten besagten Trägers als Anode unter Anlegen eines Potentials, so dass die Verbindung der Formel I in besagtem Schichtsystem unter Einbau von Gegenionen aus dem Elektrolyten oxidiert wird.

15. Verfahren zur Erhöhung der elektrischen Leitfähigkeit von Mono- oder Multischichtsystemen umfassend die Schritte

i) Herstellung einer monomolekularen Schicht aus einer Verbindung der Formel I oder aus einem Gemisch einer Verbindung der Formel I in Kombination mit weiteren zur Stabilisierung solcher

Schichten befähigten amphiphilen Verbindungen, langkettigen Kohlenwasserstoffen oder Polymeren auf einer wässrigen Lösung eines Elektronenakzeptors, und

ii) Uebertragung der dabei gebildeten Donor-Akzeptor-Komplex-Schicht auf einen festen Träger gemäss dem Langmuir-Blodgett Verfahren durch ein-oder mehrfaches Ein- und/oder Austauchen dieses Trägers durch die Schicht.

16. Verfahren zur Herstellung von Dibenzotetraaza-[14]-annulen-Radikalionensalzen, dadurch gekennzeichnet, dass bei der Herstellung einer monomolekularen Schicht aus einer Verbindung der Formel I in die Subphase ein starkes Oxidationsmittel zugegeben wird.

17. Verwendung von Mono- oder Multischichten enthaltend Verbindungen der Formel I nach Anspruch 1 als elektrisch leitfähige Ueberzüge, als elektronische Bauteile, als elektrochrome Anzeigen, als Elektroden oder als Sensoren.